Europäisches Patentamt

European Patent Office

Office européen des brevets

(11) Veröffentlichungsnummer: **0 268 895 B1**

(12) **EUROPÄISCHE PATENTSCHRIFT**

(45) Veröffentlichungstag der Patentschrift: **12.08.92**

(21) Anmeldenummer: **87116281.4**

(22) Anmeldetag: **05.11.87**

(51) Int. Cl.⁵: **B65D 81/34**, H05B 6/64

(54) **Abdeckung für einen Behälter.**

(30) Priorität: **27.11.86 DE 3640011**

(43) Veröffentlichungstag der Anmeldung:
**01.06.88 Patentblatt 88/22**

(45) Bekanntmachung des Hinweises auf die
Patenterteilung:
**12.08.92 Patentblatt 92/33**

(84) Benannte Vertragsstaaten:
**AT BE FR NL SE**

(56) Entgegenhaltungen:
**EP-A- 0 024 605**
**EP-A- 0 200 220**
**EP-A- 0 216 140**

(73) Patentinhaber: **Melitta Haushaltsprodukte
GmbH & Co. Kommanditgesellschaft
Ringstrasse 99
W-4950 Minden 1(DE)**

(72) Erfinder: **Höfer, Klaus, Dr.Ing.
Bleekstrasse 8
W-4950 Minden(DE)**

(74) Vertreter: **Stracke, Alexander, Dipl.-Ing. et al
Jöllenbecker Strasse 164
W-4800 Bielefeld 1(DE)**

Rank Xerox (UK) Business Services

## Beschreibung

Die vorliegende Erfindung betrifft eine Abdeckung für einen Behälter, dessen Inhalt in einem Microwellenherd erwärmt werden soll.

Microwellenherde werden häufig dazu benutzt, um in einem Behälter bevorratete Speisen zu erwärmen. Dabei hat sich herausgestellt, daß es sinnvoll ist, den Behälter mit einer Abdeckung zu versehen, um die Austrocknung insbesondere der oberen Schicht des Inhaltes während der Erwärmungsphase zu vermeiden.

Aus diesem Grunde sind Behälter mit entsprechend angepaßten Deckeln aus Glas oder Kunststoff bokanntgeworden. Die Deckel sind mit Öffnungen versehen, die einerseits einen Dampfaustritt ermöglichen und andererseits die Entstehung von Überdruck im Behälter verhindern.

Nachteilig ist, daß für jeden Behälter ein entsprechend angepaßter Deckel verfügbar sein muß.

Gemäß dem als Zwischenliteratur (Artikel 54.3 EPÜ) zu bezeichnenden Dokument EP-A-0 216 140 ist bereits vorgeschlagen worden, zur Abdeckung eines offenen Behälters, dessen Inhalt in einem Microwellenherd erwärmt werden soll, eine Folie zu verwenden, die Belüftungslöcher aufweist.

Gemäß der vorerwähnten Literaturstelle wird die Verwendung einer Zellglasfolie vorgeschlagen.

Der vorliegenden Erfindung liegt die Aufgabe zugrunde, eine Abdeckung zu schaffen, die einerseits für unterschiedlich geformte Behälter verwendbar und andererseits leicht und problemlos handhabbar ist.

Die Lösung dieser Aufgabe ergibt sich aus dem Patentanspruch.

Die Verwendung einer Polyolefinfolie gemäß dem Patentanspruch bietet verschiedene, praktische Vorteile.

Einerseits ist die einwandfreie Anbringung einer derartigen Polyolefinfolie an einen Behälter leicht und problemlos durchzuführen. da die Polyolefinfolie aufgrund ihrer Haftungseigenschaften ohne weitere Vorbehandlung am Behälter festgelegt werden kann. Polyolefinfolien gemäß dem Patentanspruch sind im allgemeinen sehr gelastisch und auch dehnfähig, so daß eine Beschädigung beim Abdecken eines Behälters durch mechanische Beanspruchung weitestgehend ausgeschlossen ist.

Weiterhin ist es als vorteilhaft anzusehen, daß die Polyolefinfolie im Sinne des Patentanspruches ihre vorteilhaften Eigenschaften auch bei Erwärmung bis zum angegebenen Temperaturbereich beibehält, so daß die Entfernung der Abdeckung nach dem Erwärmen des Inhaltes des Behälters ebenso leicht und problemlos durchführbar ist wie das Abdecken selbst. Durch die Löcher in der Polyolefinfolie kann ggfs. Dampf aus dem Behälter austreten, in jedem Falle wird aber ein Überdruck im Behälter vermieden.

Da die Polyolefinfolie durchsichtig ist, kann der Inhalt des Behälters ständig beobachtet werden.

Die Haftfähigkeit der Polyolefinfolie bietet nicht nur den schon erwähnten Vorteil des einfachen Anbringens am Behälter ohne Vorbehandlung, sondern auch noch den Vorteil, daß die Abdeckung sicher am Behälter festgelegt ist.

## Patentansprüche

1. Verwendung einer Löcher aufweisenden, elastischen, naßfesten, bis etwa 140°C temperaturfesten, haftfähigen, durchsichtigen, microwellenfesten und lebensmittelunbedenklichen Polyolefinfolie, vorzugsweise einer Polypropylenfolie mit hohem ataktischen Anteil, als Abdeckung für einen offenen Behälter, dessen Inhalt in einem Microwellenherd erwärmt werden soll.

## Claims

1. Use of an elastic, adhesive, transparent, microwave-resistant polyolefin foil which has holes and which has wet strength and which is temperature-resistant up to about 140°C and which is harmless to foodstuffs, preferably a polypropylene foil with a high atactic proportion, as a cover for an open container, the content of which is to be heated in a microwave oven.

## Revendications

1. Utilisation d'une feuille de polyoléfine à trous, élastique, résistant à l'état humide, résistant à la température jusqu'à environ 140°C, adhérente, transparente, résistant aux micro-ondes et neutre pour les aliments, de préférence une feuille de polypropylène à haut pourcentage atactique, comme couverture d'un récipient ouvert, dont le contenu doit être chauffé dans un four à micro-ondes.